Europäisches Patentamt

European Patent Office

Office européen des brevets

(11) Publication number: **0 419 264 A2**

## EUROPEAN PATENT APPLICATION

(21) Application number: 90310311.7

(51) Int. Cl.⁵: **C11D 3/36**, C11D 3/37, C07F 9/30, C08G 79/04

(22) Date of filing: 20.09.90

| | |
|---|---|
| The title of the invention has been amended (Guidelines for Examination in the EPO, A-III, 7.3). | (71) Applicant: **Albright & Wilson Limited**<br>**210-222 Hagley Road West**<br>**Oldbury Warley West Midlands(GB)** |
| (30) Priority: 20.09.89 GB 8921280 | (72) Inventor: **Hoye, Peter Theodore**<br>**Tresco, Orchard Grove, Kinver**<br>**Stourbirdge, West Midlands, DY1 611(GB)**<br>Inventor: **Connor, David**<br>**Scots Craig, de Walden Road**<br>**West Malvern, Worcestershire WR14**<br>**4BD(GB)** |
| (43) Date of publication of application:<br>**27.03.91 Bulletin 91/13** | |
| (84) Designated Contracting States:<br>**AT BE CH DE DK ES FR GB GR IT LI LU NL SE** | |
| | (74) Representative: **Savidge, Roger Gordon**<br>**Madgwick et al**<br>**c/o Albright & Wilson Limited, P.O. Box**<br>**2098,7 Stars Road**<br>**Oldbury, Warley, West Midlands B69**<br>**4PR(GB)** |

(54) **Aminophosphinates and polymers thereof and their use in detergent compositions.**

(57) Certain amino phosphinates and novel polymeric and oligomeric amino phosphinates, which can be obtained by the reaction of an amine with hypophosphorous acid in the presence of a carbonyl compound and an inorganic acid, are useful as builders or co-builders in detergent compositions.

EP 0 419 264 A2

## AMINOPHOSPHATES

This invention concerns amino phosphinates and polymers thereof which are useful as detergent builders, their formulation, production, use, and detergent compositions containing them.

Detergent builders are compounds which assist surfactants to remove soil more efficiently, by sequestering or otherwise removing calcium ion from wash water and and/or by maintaining an alkaline pH.

Phosphates and polyphosphates are commonly employed as builders in both solid and liquid detergent formulations; however, because of restrictions on their use in certain countries, there has been a move towards the use of alternative builders such as zeolites. None of the alternatives function as efficiently as phosphate builders and a corresponding reduction in the level of soil removal has been observed. The poor laundry performance of non-phosphate detergents leads to greater usage of surfactants, which are expensive and which may be less environmentally friendly than the phosphates themselves.

We have now discovered that certain amino phosphinates and novel polymeric and oligomeric amino phosphinates, which can be obtained by the reaction of an amine with hypophosphorous acid in the presence of a carbonyl compound and an inorganic acid, exhibit excellent detergent builder and co- builder action, but which are not subject to restrictions on environmental grounds. Addition of even very low concentrations of our novel builders can spectacularly improve the soil removing capabilities of zeolite built detergent compositions, thus demonstrating the considerable co-operative or synergistic effects the compounds of this invention can exert upon the building capabilities of e.g. zeolites.

This invention provides cleaning compositions containing as builder or co-builder an amino phosphinate of the formula:

$$RR'NCR'_2PO(OH)CR'_2NRR' \quad (I)$$

or polymers or oligomers with a repeating unit of the formula:

$$[-PO(OH)CR'_2NR(R''NR)_nCR'_2-] \quad (II)$$

wherein each of the R groups which may be the same or different is an optionally substituted alkyl, cycloalkyl, alkenyl, aryl, aralkyl, alkaryl or alkoxyalkyl group of 1-20 carbon atoms each of which may be optionally substituted once or more than once, and each of the $R'$ groups, which may be the same or different, is hydrogen or an R group as hereinbefore defined, $R''$ is a divalent alkylene, cycloalkylene, alkarylene, alkylene group optionally interrupted by oxygen atoms or an arylene group and n is zero or an integer from 1 to 10, and polymers or oligomers thereof. All functional groups resident upon R,$R'$ or $R''$ should not irreversibly decompose in the presence of a carbonyl compound or hypophosphorous acid or inorganic acid.

The invention further provides novel polymeric and oligomeric amino phosphinates with repeating units of formula (II) and compounds of formula (I), in which R contains at least one phosphorus or sulphur atom and those derived from lysine, 1-amino sorbitol, 4-amino butyric acid and 6-amino caproic acid. The polymeric or oligomeric phosphinates of this invention may have molecular weights corresponding to as few as 2 units of formula (II), or as many as 1000 e.g. 200, for example they may have molecular weights as low as 244 or as high as 100,000 or more such as 500,000.

The phosphinates of this invention may be in the form of free acids or in the form of at least partly neutralised salts thereof. The cations are preferably alkali metal ions, preferably sodium or alternatively potassium or lithium, but may be other monovalent, divalent or trivalent cations such as ammonium and organic substituted ammonium, (including quaternary ammonium), such as triethyl- or triethanolammonium, quaternary phosphonium such as tetrakis hydroxymethyl phosphonium, alkaline earth such as calcium and magnesium or other metal ions such as aluminium. Preferably the salts or partial salts are water soluble e.g. with a solubility in water at 20° C of at least 10g/l especially at least 100g/l.

The $R'$ groups are preferably all hydrogen atoms. Alternatively they may independently be alkyl e.g. methyl or ethyl, aryl e.g. phenyl or tolyl, cycloalkyl, aralkyl e.g benzyl, alkoxyalkyl e.g alkoxyhexyl or these groups optionally substituted at least once or at least twice such as substituted alkyl e.g. haloalkyl, carboxyalkyl or phosphonoalkyl, substituted aryl e.g. hydroxyphenyl or nitrophenyl.

Preferably the R groups represent substituted alkyl e.g ethyl or methyl, or aryl e.g phenyl or tolyl groups, or heterocycles such as thiazole or triazole groups, and especially at least one and preferably all represent groups which carry one or more functional groups capable of coordinating to metal ions, such as carbonyl, carboxyl, amino, imino, amido, phosphonic acid, hydroxyl, sulphonic acid, arsenate, inorganic and organic esters thereof e.g. sulphate or phosphate, and salts thereof. The phosphinates of this invention may carry a number of different R groups, as is the case if more than one amine is added to the reaction mixture from which they are isolated.

The preferred phosphinates of this invention are those in which at least one of the R groups carries at least one carboxylic acid substituent, for example $-C_6H_4COOH$, but especially a carboxyalkyl group containing 2 to 12 carbon atoms e.g. $-CH_2COOH$ when the phosphinate is synthesised using glycine, $-CH-(COOH)CH_2COOH$ when the phosphinate is synthesised using aspartic acid or $-CH(COOH)CH_2CH_2COOH$ when the phosphinate is synthesised using glutamic acid.

The phosphinates of this invention may be optically active e.g. as in the case of examples in which at least one of the R, R$'$ or R$''$ groups is chiral or when the two R$'$ groups on one or more of the carbon atoms in (I) or (II) are non-identical. The arrangements of the substituents around each chiral centre may be of either configuration. If desired racemic mixtures may be separated into optical isomers by means known per se.

The phosphinates of this invention may be formed by allowing hypophosphorous acid to react with an amine in the presence of a carbonyl compound which is either a ketone or an aldehyde or a mixture thereof and an inorganic acid. The hypophosphorous acid may be added to the reaction as the acid or as a salt thereof e.g. sodium hypophosphite. The reaction is accompanied by the evolution of water.

The phosphinates of this invention may be synthesised by the reaction of one or more than one primary amine, $RNH_2$ such as glycine, aspartic acid, glutamic acid, 4-amino butyric acid, 6-amino caproic acid, lysine, 1-amino sorbitol or taurine, or one or more than one secondary amine, RR$'$NH or R(NHR$''$)$_n$NHR such as N,N$'$ Dimethyl ethylenediamine or N,N$'$ dimethylethylene triamine or a mixture of at least two of the aforesaid amines, such that a phosphinate is formed in which not every unit is identical, but each has the same general formula (I) or with repeating units (II). Polymeric or oligomeric phosphinates of varying molecular weights may be synthesised from a mixture of a primary amine and a secondary amine. The use of primary amines in the reaction mixture gives compounds of formula (I) in which only one of the two amine hydrogen atoms is replaced, or with repeating units (II), whilst the use of secondary amines in the reaction mixture only gives compounds of formula (I).

The phosphinates of this invention may be synthesised from one or more than one carbonyl compound.

The phosphinates of this invention may be synthesised in any liquid phase in which the reactants and preferably the products are at least sparingly soluble, but preferably the reaction is performed in acidic aqueous solution at 40-120° C within a pH range of 0-2 e.g. 0.5-1.5. The amount of the carbonyl compound is normally 1-4 times the amount of the hypophosphorous acid; preferably the carbonyl compound is added slowly to a mixture of the other ingredients. The reaction is normally terminated after 0.5-5 hours. The product may be isolated by filtration to give the free polymeric phosphinic acid, or treated with base to form a solution of the polymeric phosphinate. The solution may be stripped of water to yield a solid salt of the polymeric phosphinate.

Alternatively the reaction mixture may be concentrated by evaporation or diluted by the addition of more liquid; the product may then be used as such or at least partly neutralised with a base e.g. sodium hydroxide, or alternatively the reaction product may be heated with a base before use. If desired the reaction products may be separated into pure components for example by column chromatography e.g. by ion exchange column chromatography.

The synthesis of phosphinates according to this invention by processes involving the mixture of either primary or mixtures of primary and secondary amines with hypophosphorous acid, a mineral acid and a carbonyl compound such as formaldehyde are novel processes which constitute further embodiments of this invention.

The phosphinates of this invention may be used in solid or liquid detergent compositions for wet or dry cleaning. These compositions, can contain ionic, cationic, amphoteric, semipolar and/or non-ionic surfactants, with or without an additional builder or co builder such as a zeolite, sodium tripoly phosphate, potassium pyrophosphate, sodium citrate, sodium nitrilotriacetate or sodium carbonate and optionally at least one of bleaching agents e.g. perborate, antiredeposition agents, buffers, dyes, perfumes, optical brightening agents, fillers and other detergent adjuvents. Such detergent compositions can have one or more surfactants usually in a total amount of 3-50%, such as an ionic surfactant 0-50% typically, 5 to 30% e.g. 10-20%, a nonionic surfactant 0-50% e.g. 3-20%, a soap 0-50% e.g. 1-30%, typically 2 to 3% an enzyme 0-5% e.g. 0.1-2%, a bleaching agent 0-35% e.g. 2-10%, a builder 0-50% e.g. 15-35% especially 10-30%, sodium silicate 0-10% e.g. 4-10%, an antiredeposition agent such as sodium carboxy methyl cellulose 0-5% e.g. 0.5-5%, an organic solvent e.g. ethanol usually in a proportion of 0-30% e.g. 2 to 10%, one or more sequestrants such as a phosphate 0-10% e.g. 0.2-5%, a peroxide activator e.g. tetraacetyl ethylene diamine 0-5% e.g. 0.1-4%, a buffer e.g. borax or an organic base usually in amounts of 0-10% e.g. 2-8%, an optical brightener 0-5% e.g. 0-4%, a perfume 0-5% e.g. 0-2%, water 0-80%, and a phosphinate according to this invention usually in an amount of 0.1-60% e.g. 0.5-50% preferably 1 to 40% more preferably 2 to 30% most preferably 3 to 20%. Liquid detergents according to our invention typically contain 20 to 75% by wt. more usually 30 to 60% of water. Solid detergents usually contain 10 to 75% by

3

wt., more usually 30 to 60% e.g. 40 to 50% of a filler such as sodium sulphate.

Additionally the phosphinates of this invention can be used as peroxide stabilizers e.g. in pulp bleaching, typically as a 0.01-5% solution, as corrosion and scale, especially calcium silicate scale, inhibitors, in a concentration of 0.1-50 ppm in water systems such as boiler water or cooling water, as a water softener in amounts in molar excess over the dissolved metal ions and as deflocculating agents in solutions of concentration 0.01-5%.

The phosphinates of this invention may be in the form of mixtures with at least one of hydrochloric, sulphuric, phosphorous or phosphoric acids, or salts thereof, especially with hydrochloric acid e.g. in amount of 0.1 - 10g/l hydrochloric acid but preferably 0.1-1g/l. Also they may be used as a mixture with each other, or with their precursors such as formaldehyde, amines, ketones, and aldehydes, or with by-products such as $(HOCH_2)_2P(O)OH$ or N-methylated amines such as $RR'NCH_3$, $CH_3NR(R''NR)_nCH_3$ or oligomers or polymers with a repeating unit (II) and one or more terminal units $-PO(OH)CR'_2NR(R''NR)_nCH_3$.

The invention is illustrated in the following examples.

Example 1

An aqueous solution of glycine (150.0g in 200 cm³ of water) was mixed with hypophosphorous acid (264.0g of a 50% by weight aqueous solution) and hydrochloric acid (200 cm³ of a 36% by weight aqueous solution), this solution was then heated to reflux and formaldehyde (332 cm³ of a 37% by weight solution) was added dropwise over a period of 120 minutes; the reaction mixture was refluxed in total for a period of 230 minutes. The resulting thick mixture was then allowed to cool to room temperature and solubilised by the addition of sodium hydroxide (271g in 500 cm³ of water) to give a solution of pH 9 containing the product as a sodium salt. The solution (2332g, Found P,2.74%) contained 15% of the product as the polymeric phosphinic acid. Gel permeation chromatography gave a peak molecular weight of 2241 with a dispersivity of 1.866. Molecular weight determination by LALLS (low angle laser light scattering) gave an average molecular weight of 3778. The product was further characterized using $^{31}P$ NMR giving a spectrum which accorded with the suggested product.

Example 2

An aqueous solution of glycine (150.0g in 200 cm³ of water) was mixed with hypophosphorous acid (264.0g of a 50% by weight aqueous solution) and hydrochloric acid (200cm³ of a 36% by weight aqueous solution); this solution was then heated to reflux and formaldehyde (337 cm³ of a 37% by weight aqueous solution) was added over a period of 235 minutes. The reaction mixture was then refluxed for a further 35 minutes, allowed to cool to room temperature and then methylated spirits (500cm³) were added, and the solution was filtered to yield a solid which was washed with methylated spirits and air dried to yield the product as 308g of a white solid which was characterized by $^{31}P$ (at pH 10) NMR giving a spectrum which accorded with a structure with repeating units as represented by formula (II). Found: P-15.2%, N-6.8%, Cl-5.4%, C-24.5%, H-4.9%. Gel permeation chromatography gave a peak molecular weight of 2240 with a dispersivity of 1.768.

Example 3

A racemic sample of aspartic acid (133.11g) was added to a stirred mixture-of hypophosphorous acid (66.06g of a 50% by weight aqueous solution) and hydrochloric acid (50 cm³ of a 36% by weight aqueous solution). This mixture was then stirred at room temperature to form a solution, brought to reflux, and then formaldehyde (162.33g of a 37% by weight aqueous solution) was added over a period of 50 minutes. The reaction mixture was then refluxed for a further 220 minutes and 200cm³ then the apparatus was reassembled for distillation and approximately 200cm³ of distillate was removed; distillation was terminated when the reaction mixture reached a temperature of 116° C. The residue was then allowed to stand at room temperature overnight; this mixture was then diluted by the addition of 25cm³ of water, stirred and filtered to give the product as a pale yellow aqueous solution. The product solution was characterized by $^{31}P$ NMR to give a spectrum with two major resonances at 34.5ppm and 39.0ppm respectively.

Example 4

Glutamic acid (73.60g) was added to an aqueous mixture of hypophosphorous acid (66.12g of a 50% by weight solution) and hydrochloric acid (50 cm$^3$ of a 36% by weight solution); this mixture was heated to reflux and then formaldehyde (81.17 cm$^3$ of a 37% by weight aqueous solution) was added dropwise over a period of 150 minutes. The solution was refluxed for a further 210 minutes and then allowed to stand at room temperature overnight. The reaction mixture was then concentrated by distilling off the water and excess reactants until a temperature of 120° C was reached to give 142.67g of the product as a thick pale yellow liquid which was characterized by $^{31}$P NMR.

Example 5

An aqueous solution of N-phosphonomethyl glycine (169.0g in 100 cm$^3$ of water) was mixed with hypophosphorous acid (66.0g of a 50% by weight aqueous solution) and hydrochloric acid (150 cm$^3$ of a 36% by weight aqueous solution). This mixture was heated to reflux and formaldehyde (120 cm$^3$ of a 37% by weight aqueous solution) was added over a period of 50 minutes; the solution was refluxed for a total of 440 minutes.

The solution was stripped on a rotary evaporator to give 270g of the product as a white solid. 31P NMR indicated the virtual absence of hypophosphorous acid, the possible side-product bis (hydroxymethyl) phosphinate or compounds containing phosphorus atoms linked to hydrogen atoms.

Example 6

Iminodiacetic acid (79.8g), hypophosphorous acid (39.6g of a 50% by weight aqueous solution), hydrochloric acid (34.38g of a 38% by weight aqueous solution) and water (25cm$^3$) were mixed and heated to reflux and then formaldehyde (97.2g of a 37% by weight aqueous solution) was added dropwise over a period of 3 hours. The reaction mixture was stirred for a further 2 hours at reflux, left to stand overnight at room temperature, and then concentrated by evaporation at 60° C, washed with dilute hydrochloric acid and then acetone and then air dried to give 102.0g of the product as a white solid. $^{31}$P NHR showed a single triplet with a chemical shift of 10.38ppm which accords with the structure represented by formula (I).

Example 7

A zeolite-built liquid laundry detergent composition was prepared as a base formulation, and to this was added 5% by weight of the product from example 1.

The base formulation had the following composition:

| Sodium alkylbenzene sulphonate | 7.5% |
| --- | --- |
| Sodium alkyl sulphate ($C_{12-16}$) | 1.5% |
| Fatty alcohol triethoxylate | 2.5% |
| Zeolite 4A (Degussa Wassalith P) | 20.0% |
| Borax | 1.0% |
| Phosphonate | 1.5% |
| Silicone foam suppressant | 0.25% |
| Optical brighteners | 0.15% |
| Enzymes | 0.2% |
| Perfume | 0.3% |
| Water to | 100% |

Example 8

The detergent composition of example 7 was used to launder a series of soiled cloths in a standardised test; these results were then compared with those obtained from the use of an identical detergent composition except that the product of example 1 was omitted.

The washing tests were conducted with a concentration of log/1 of detergent, for 30 minutes, at a temperature of 60° C, in a launderometer using water with 200ppm of dissolved $CaCO_3$. The percentage of soil removal was then determined by measuring the amount of light reflected from the previously soiled area and comparing it with the known values for soiled and unsoiled cloth samples. The measured percentages were then averaged for a number of different cloth types to give a single result for each additive.

|  | Average soil removal |
|---|---|
| Composition according to example 7 | 47.1% |
| Base formulation according to example 7 | 34.9% |

### Example 9

A solid detergent formulation was prepared as follows:

| | |
|---|---|
| Sodium tripolyphosphate | 30.0% |
| Sodium perborate | 10.0% |
| Nonionic surfactant (ethoxylated fatty alcohol) | 5.0% |
| Anionic surfactant | 6.0% |
| Sodium silicate | 6.0% |
| Ethylene diamine tetraacetic acid | 0.5% |
| Phosphate ester | 0.2% |
| Tetraacetyl ethylene diamine | 1.5% |
| Enzyme | 0.8% |
| Carboxymethyl cellulose | 1.0% |
| Product of example 16 | 5.0% |
| Water | to 100.0% |

### Example 10

A liquid detergent formulation was prepared as follows:

| | |
|---|---|
| Alkyl benzene sulphonate | 15.0% |
| Nonionic surfactant (ethoxylated fatty alcohol) | 17.0% |
| Soap | 15.0% |
| Enzyme | 0.8% |
| Triethanolamine | 5.0% |
| Polymeric acid as made in example 1 | 5.0% |
| Optical brightener and perfume | 0.5% |
| Ethanol | 10.0% |
| Water | to 100.0% |

### Example 11

Compounds according to this invention were further tested for their soil removing capabilities in a standard wash operation against various known co-builders. Testing was averaged over 7 different standard samples, each of which is a different type of soil on a different type of fabric. A 60° C wash temperature was used with water 200 ppm in $CaCO_3$, and the washing composition was added at a level of 10g/l.

| SAMPLE | % INCREASE OF SOIL REMOVAL |
|---|---|
| Base formulation according to Example 7 (HDL) | 0 |
| HDL + 5% Nitrilo triacetic acid | 27.9 |
| HDL + 5% sodium carbonate | 24.2 |
| HDL + 5% sodium citrate | 10.7 |
| HDL + 5% diethylene triamine pentakis (methylene phosphonic acid) Disodium salt | 16.2 |
| HDL + 5% product of example 1 | 35.2 |

Example 12

In a test to establish the comparative calcium complexing power of compounds according to this invention, a solution of calcium dodecyl benzene sulphonate was added to a solution of the complexing agent under test until turbidity was first observed. The following results were recorded:

| SAMPLE | MASS OF $Ca^{2+}$ COMPLEXED/MASS OF COMPLEXING AGENT |
|---|---|
| Product of Example 1 | 0.376 |
| Nitrilo triacetic acid | 0.200 |
| Sodium citrate | 0.241 |
| Sodium tripolyphosphate | 0.202 |
| Isoserine diacetic acid | 0.292 |

Example 13

A 1 litre vessel was charged with 75.9g of water, 75.9g (1.0 mole) of glycine (99% purity) and 106.1g (1 mole) of sodium hypophosphite monohydrate. To this was added 223.1g (2.2 moles) of a 36% by weight aqueous solution of hydrochloric acid over a period of 60 minutes, maintaining the temperature below 35° C. The mixture was heated to reflux and 186.2g (2.4 moles) of a 38.7% by weight aqueous solution of formaldehyde was added over a period of 120 minutes. Added to this mixture was 90.1g of water. The reaction mixture was refluxed for a total of 240 minutes. The resulting mixture was then allowed to cool to 35 - 45° C and then neutralised by the addition of a 50% by weight aqueous solution of sodium hydroxide, maintaining the temperature below 55° C, to give a solution of pH 9.0 containing the product as a sodium salt.

The product was characterised by gel permeation chromatography and $^{31}P$ nmr.

Example 14

An aqueous solution of glycine (150.0g, 2 moles) in water (200 ccs) was mixed with hypophosphorous acid (290.4g of 50% by weight aqueous solution, 2.2 moles) and hydrochloric acid (200 ccs of 37% by weight solution) was stirred and heated to reflux. Formaldehyde (332 mls of a 37% by wt. aqueous solution) was added dropwise to the refluxing solution over a period of 150 minutes. The thick suspension of product which formed was heated gently at reflux for a further hour and cooled. The product was solubilised in water by the addition of sodium hydroxide (240 g in water) to give a solution having a pH of 8.9 Gel permeation chromotography gave a peak molecular weight of 1592 with a dispersivity of 1.607.

Example 15

Glycine (66.6g, 0.89 mole) and sarcosine (9.12g, 0.1 moles) were added to hypophophorous acid (132.16 g. of 50% by weight aqueous solution, 1.0 moles) and hydrochloric acid (100 mls of 36% by weight solution) added. The mixture was heated to reflux and formaldehyde (178g of 40% aqueous solution, 2.4 moles) added dropwise at reflux over 113 minutes. After approximately three quarters of the formaldehyde had been added the solution became cloudy and thereafter became increasingly opaque and thick as the product separated. Heating was continued for 7 minutes after the final addition of formaldehdye at which time the product was too thick to stir. It was cooled, diluted with methylated spirit (400 mls) and filtered to give a wet filter cake (480 g) which was dissolved in NaOH solution (500g of 20%9 by weight solution) to give a clear solution with pH 12.3.

Gel permeation chromatography gave a peak molecular weight of 1723 with a dispersivity of 1.58.

Example 16

The reaction was conducted using the quantities reactants and conditions described in example 1.

At the end of reaction the thick mixture allowed to cool and methylated spirit (500 mls) added. The suspension was filtered under suction to give a wet filter cake of product (940g). The wet cake was suspended in water and dissolved by adding a solution of 249g sodium hydroxide to give 2626g of solution having a pH 8.6.

The solution was stripped in portions on a rotary evaporator under vacuo to 90° C to yield a mixture of the solid polymeric glycine phosphinic acid sodium salt and sodium chloride (350 g). Found: P, 11.6%; Cl, 6.3%; C, 14.05%; H, 5.0%, $H_2O$ by Karl Fischer - 6%.

Gel permeation chromotography gave a peak molecular weight of 1935 with a dispersivity of 1.66.

Example 17

A mixture of glycine (225 g, 3 moles), water (300 mls) hydrocholric acid (570 mls of 85% by weight solution, 6.5 moles) and sodium hypophosphate mono hydrate (315g, 3.0 moles) was stirred to reflux and treated dropwise over a period of 3 hours with formaldehyde (498 mls of 40% by volume solution 6.4 mols). The resulting thick solution was diluted with water (500 mls) and stirred for a further 2 hours at reflux. The thick product was allowed to cool and was filtered under suction on a sintered glass filter. The wet cake (1400g) was dried at 80° to yield a white solid hydrochloride salt of the polymeric glycine methylene phosphinic acid (527g). Found : P, 15.4%, C, 23.9%; H, 4.4%; Cl, 16.0%. The $^{31}P$ nmr of a solution of the solid product dissolved in sodium hydroxide to pH 10 was consistent with the proposed structure.

Example 18

The reaction was conducted as in example 17. The product slurry at the end of reaction was cooled and neutralised to pH 9.5 by adding 50% aqueous NaOH maintaining the temperature below 6° C by cooling. The resulting solution of the polmeric disodium glycine phosphinate and salt was stripped on a rotary evaporator to yield a solid which was ground to a pale yellow powder. Found : P, 8.36% C, 13.43%; H, 2.65%; Cl, 20.5%.

Example 19

Glycine (150g, 2 moles) was dissolved in a solution of sulphuric acid (230g, 2.3 moles) in water and hypophosphorous acid (264g, of 50% aqueous solution) added. The solution was stirred and heated to reflux. Formaldehyde solution (302 mls of 40% by weight, 4 moles) was .added dropwise over 60 minutes at reflux and the solution stirred and heated at reflux for a further 3 hours. The reaction solution became cloudy 45 minutes after the start of the formaldehyde addition and thereafter became increasingly thick to eventually a mayonnaise like consistency.

The $^{31}P$ nmr of the product dissolved in sodium hydroxide solution was consistent with the presence of a polymeric glycine phosphinate. Proton nmr gave a ratio of P-CH2 groups to NCH2 groups of 2.3:1.

| Example 20 | |
|---|---|
| To a zeolite built powder comprising: | |
| Sodium alkylbenzene sulphonate | 4.3% |
| Alcohol ethoxylates | 5.0% |
| Zeolite 4A (Degussa Wessalith P) | 20.0% |
| Sodium silicate ($SiO_2 : Na_2O = 1.6:1$) | 4.0% |
| Sodium carbonate | 5.0% |
| Sodium carboxymethyl cellulose | 0.3% |
| Phosphonate | 2.0% |
| Phosphate ester antifoam | 1.0% |
| Optical brighteners | 0.15% |
| Sodium perborate | 14.0% |
| Sodium sulphate | 16.0% |
| Water | Remainder |
| was added 5% of the product of Example 1. | |

| Example 21 | |
|---|---|
| A liquid composition was prepared comprising: | |
| Sodium alkylbenzene sulphonate | 4.5% |
| $C_{12-16}$ alkyl ether sulphate | 10.8% |
| Alcohol ethoxylates | 5.0% |
| Amine oxide (Empigen OB) | 0.4% |
| $C_{12-13}$ fatty acid | 9.0% |
| Triethanolamine | 4.5% |
| Potassium Carbonate | 4.95% |
| Phosphonate | 0.9% |
| Optical brighteners | 0.2% |
| Enzymes | 0.3% |
| Water, preservatives, pigment and opacifier to 100% | |
| To one portion was added 5% of the product of example 1. | |

In comparison tests carried out at 60°C using water containing 200 ppm $CaCO_3$ the additive containing composition showed an improvement in average soil removal over seven test cloths from 39.5 to 46.7% with the most marked improvement being on polyester-cotton fabrics which showed an improvement from 28.2 to 41.2%.

## Claims

1. Cleaning compositions containing as builder or co-builder an amino phosphinate of the formula:

RR'NCR'$_2$PO(OH)CR'$_2$NRR'    (I)

or polymers or oligomers with a repeating unit of the formula:

[-PO(OH)CR'$_2$NR(R''NR)$_n$CR'$_2$-]    (II)

wherein each of the R groups which may be the same or different is an optionally substituted alkyl, cycloalkyl, alkenyl, aryl, aralkyl, alkaryl or alkoxyalkyl group of 1-20 carbon atoms each of which may be optionally substituted once or more than once, and each of the R' groups, which may be the same or different, is hydrogen or an R group as hereinbefore defined, R'' is a divalent alkylene, cycloalkylene, alkarylene, alkylene group optionally interrupted by oxygen atoms or an arylene group and n is zero or an integer from 1 to 10, and polymers and oligomers thereof, provided that any functional groups present on R, R$'$ and R$''$ are not irreversibly decomposable in the presence of a carbonyl compounds or hypophosphorous or inorganic acid.

2. Cleaning compositions according to claim 1 wherein at least one R group is a substituted R group having one or more functional groups capable of co-ordination to a metal ion.

3. Cleaning compositions according to claim 2 wherein said functional group is selected from the groups carbonyl, carboxyl, amino, imino, amido, phosphonic acid, hydroxyl, sulphonic acid, arsenate, inorganic and organic esters thereof.

4. Cleaning compositions according to any of claims 1-3 wherein R$'$ is hydrogen.

5. Cleaning compositions according to any of claims 1-4 wherein at least one R group carries at least one substituent which is a carboxylic acid substituent.

6. Cleaning compositions according to claim 5 wherein said carboxylic acid substituent is a carboxyalkyl group containing 2 to 12 carbon atoms.

7. Cleaning compositions according to any preceding claim wherein the compounds of formula (I) or polymers or oligomers with a repeating unit of formula (II) are optically active.

8. Cleaning compositions according to any preceding claim wherein the phosphinates contained therein are present in the form of free acids or as partly neutralised salts thereof.

9. Cleaning compositions according to any preceding claim wherein the phosphinates contained therein are formed by the reaction in any liquid phase of hypophosphorous acid in the form of the acid or as a salt thereof, with amine in the presence of one or more than one carbonyl compound and an inorganic acid.

10. Cleaning compositions according to claim 9 wherein said amine is a mixture of primary and secondary amines.

11. Cleaning compositions according to claim 9 wherein said amine is a mixture of primary amines.

12. Cleaning compositions according to claim 9 wherein said amine is an amino acid and the carbonyl compound is formaldehyde.

13. Cleaning compositions according to claim 9 wherein the amine is glycine.

14. Cleaning compositions to claim 9 wherein the liquid phase is aqueous acid solution.

15. Compounds of formula (I), in which R contains at least one phosphorus or sulphur atom, and those derived from lysine, 1-amino sorbitol, 4-amino butyric acid and 6-amino caproic acid.

16. Polymeric and oligomeric amino phosphinates with repeating units of formula (II), in which R contains at least one phosphorus or sulphur atom, and those derived from lysine, 1-amino sorbitol, 4-amino butyric acid and 6-amino caproic acid.

17. A process for the manufacture of the phosphinates of claims 1-14 wherein involves the mixing of primary, or mixtures of primary and secondary, amines with hypophosphorous acid, a mineral acid, and one or more than one carbonyl compound.